Europäisches Patentamt

**European Patent Office**

Office européen des brevets

(11) Publication number: **0 110 493 B1**

# EUROPEAN PATENT SPECIFICATION

(45) Date of publication of patent specification: **04.12.91**

(51) Int. Cl.5: **B29C 47/06**, B29D 9/00, B29C 47/28, B32B 27/08, B65D 65/40

(21) Application number: **83303825.0**

(22) Date of filing: **01.07.83**

The file contains technical information submitted after the application was filed and not included in this specification

(54) Method for producing a multi-layered plastics container.

(30) Priority: **29.11.82 US 445261**

(43) Date of publication of application:
**13.06.84 Bulletin 84/24**

(45) Publication of the grant of the patent:
**04.12.91 Bulletin 91/49**

(84) Designated Contracting States:
**AT BE CH DE FR GB IT LI LU NL SE**

(56) References cited:
| EP-A- 68 718 | JP-A-57 011 052 |
| US-A- 3 308 508 | US-A- 3 694 292 |
| US-A- 4 047 868 | US-A- 4 048 428 |
| US-A- 4 217 161 | US-A- 4 226 822 |
| US-A- 4 234 663 | |

TECHN. MITT. KRUPP, vol. 37, no. 1, May 1979, pages 1-12; R. Hegele et al.:"Herstellung mehrschichtiger Kunststoff-Hohlkörper nach dem Coextrusions-Blasformverfahren"

Presentation "Oriented Multilayer containers for food: Solid phase pressure formed cups and stretch-blow molded articles by Munelli Yamada, at the 5th annual international conference on oriented plastic containers, March 17-19, 1981

(73) Proprietor: **AMERICAN NATIONAL CAN COMPANY**
**8770 West Bryn Mawr Avenue**
**Chicago, Illinois 60631(US)**

(72) Inventor: **Briggs, Jerald E.**
**1507 Avalon Court**
**St. Charles Illinois 60174(US)**
Inventor: **Pfeutzenreuter, Henry**
**8045 Whirlaway**
**Alta Loma California 91701(US)**

(74) Representative: **Holdcroft, James Gerald, Dr.**
**et al**
**Graham Watt & Co., Riverhead**
**Sevenoaks, Kent TN13 2BN(GB)**

## Description

This invention relates to a method of making a multi-layer, preferably translucent plastics container.

Multi-layered laminate structures have long been used to make containers for a variety of products wherein, due to industrial requirements and specifications, it is not possible to use containers made from a single plastic material. For example, in Techn. Mitt. Krupp Vol. 37, No. 1 May 1979 pages 1-12, there is disclosed a method of the type set forth in the preamble to claim 1 appended hereto. In packaging foods, liquids such as various juices, sanitary articles and a host of other products, the container wall must withstand attack by oxygen or some of the ingredients of the packaged product which often tend to permeate through the container wall.

It has, by now become well known to make multilayered laminate structures from thermoformable plastics and to make containers therefrom by injection molding or blow molding techniques, and numerous thermoplastic resins have been disclosed and recommended for this purpose. Some of these thermoplastic materials and the composite laminated structures made therefrom are described in US-A Nos. 3,560,325; 3,595,740; 3,882,259; 3,955,697; 4,182,457 and 4,234,663, to cite a few.

As mentioned in US-A 4,234,663, when multilayer foil structures are used to make containers by thermoforming of the foil, a considerable amount of "scrap" is obtained which may be as high as 50% of the total weight of the initially coextruded materials. If the scrap cannot be included in the multi-layered laminate structure, it constitutes a waste which must be disposed of with consequent economic disadvantages.

In this US patent, re-introduction of at least part of the scrap into the multi-layer foil structure as a "supplementary" layer is disclosed. The scrap-containing layer is constituted by a mixture of the scrap per se with sufficient amounts of adhesive, which is a graft copolymer of a styrenic monomer on a polyolefinic substrate.

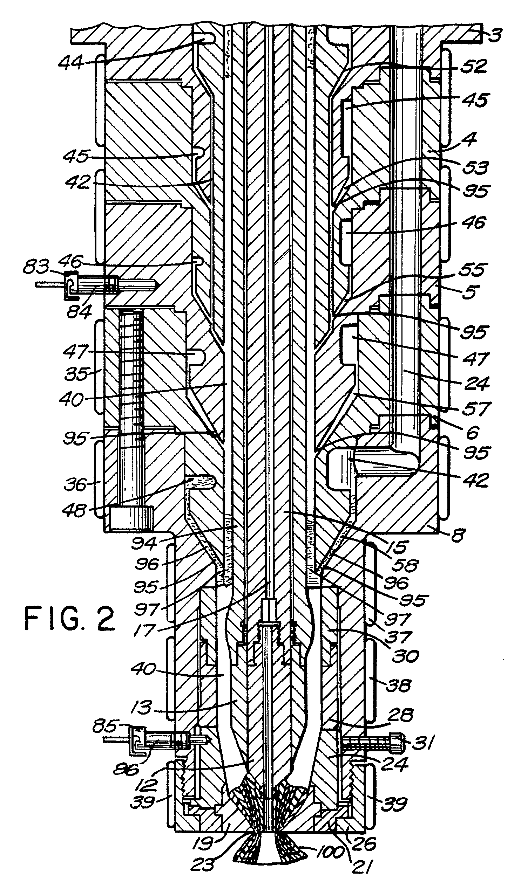

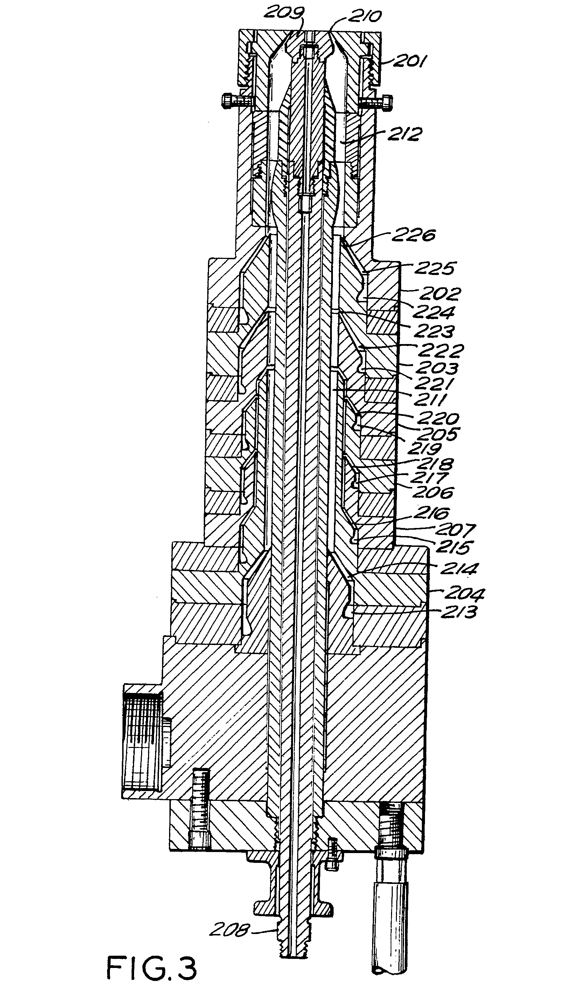

In an article by Muneki Yamada entitled "Oriented Multi-Layer Containers For Food: Solid Phase Pressure Formed Cups and Stretch-Blow Molded Bottles", presented on March 17-19, 1981 at the "5th Annual International Conference On Oriented plastic Containers", the author discusses the technology of solid phase pressure forming and stretch-blow molding in the manufacture of multi-layer containers. With reference to Figures 2 and 3, the author describes a 7-layer structure which includes a scrap layer interposed between a polypropylene layer and an adhesive layer. No significant reduction in clarity (i.e. transparency of the containers) occurs provided the thickness of the scrap layer is within a certain critical thickness ratio relative to the other layers.

At page 5, the Yamada article refers to US-A 4,182,457 for making "oriented" containers. This patent, however, is basically concerned with making transparent containers obtained by orienting the thermoplastic polyolefin layer during stretch blow molding of the parison.

So far as it is known, there is not, at the present, a totally satisfactory method of utilizing all the scrap in making a satisfactory multi-layer laminate for forming containers.

Various apparatuses for forming a multi-layered parison and blow molding the parison into a container of the desired shape are known. See, for example, US-A Nos. 4,047,868; 4,297,092; 3,802,826; 3,447,204; 3,478,139; 3,546,743; 4,042,661; 4,125,585; 4,134,952; 4,152,104; and 4,281,981. The common features of these apparatuses include an annular discharge flow passageway formed between a cylindrical flow tube and a die body, an annular discharge orifice at the downstream end of the annular discharge flow passageway through which the parison or multi-layered laminate structure is extruded, feed passageways which supply resin material to the apparatus for an individual resin layer and connecting passageways which join the feed passageways to the annular discharge flow passageway at junctions where an individual resin layer is added to the multi-layered laminate flowing from upstream of the junction.

In US-A 4,047,868 the use of pressure rings to control the relative flow of resin materials in the connecting passageways and the thickness of the individual layers is taught. Use of annular accumulation chambers to distribute material flowing into the feed passageways circumferentially to form more uniform layers is taught in US-A Nos. 4,297,092; 4,152,104; 4,042,661; 3,546,743; 3,478,139; and 3,447,204. Rotation of the die body about the mandrel, to provide more uniform layers, is described in US-A 3,802,826. Methods of controlling thickness and concentricity of the layers are taught in US-A 4,047,868; 3,546,743; and 3,447,204.

A principal object of the various apparatuses disclosed in the patents mentioned above was to produce multi-layered structures with good roll geometry, that is a gauge thickness of substantially uniform depth across the width of the structure. Another object was to provide uniform deposition of a relatively thin molten layer of a polymer onto a relatively thick molten layer of another polymer under conditions of laminar flow without causing turbulence leading to fusion of the molten layers, uneven laydown of one layer upon the other or abberations which ultimately lead to delaminations when the finished product is subjected to mechanical stress.

These problems are particularly acute when a relatively thin layer is to be laminated to a relatively thick layer. It is nonetheless important to be able to form laminates including one or more thin layers. For example, a container might be formed with an inner layer, an adhesive layer and an oxygen barrier layer. The inner layer may be formed with a thermoplastic polyolefin, the adhesive layer with a carboxylic acid modified polyolefin and the barrier layer (if oxygen is to be excluded) of a saponified copolymer of ethylene and vinyl acetate. The two first-mentioned polymers are relatively inexpensive. Polymers of the last mentioned type polymers are specialty chemicals and quite expensive. For economic reasons, therefore, it is important that the expensive polymers be laid down in thin layers. It is equally important, for in-use performance, that the thin layers have good roll geometry, that they completely cover the thick layer(s) and that there be no weak areas subject to delamination under mechanical stress. These ends are difficult to achieve in conventional equipment utilized for the preparation of parisons for blow molding.

Amongst the problems to which the present invention is directed is the provision of a multi-layer laminate structure including a distinct and separate layer of scrap produced from the co-extrudate formed during coextrusion of the different layers of several thermoplastic materials to appear in the laminate structure.

Another problem lies in devising a method for the efficient and economical utilization of the scrap when making containers from such a multi-layer laminate structure.

Another problem is to devise packaging containers made from multi-layer laminated structures which include a scrap layer, wherein the container has, inter alia, excellent resistance to oxygen permeability and transparency.

The process of the present invention enables the manufacture of a multi-layer laminate structure which includes a separate layer of scrap made from a regrind of the extrudate of the various resins used in making the laminate structure. Preferably, the multi-layer laminate structure comprises an outer thermoplastic polyolefin layer, an inner thermoplastic polyolefin layer and an intermediate oxygen barrier layer. The outer and inner polyolefin layers are preferably made of polypropylene, particularly crystalline isotactic polypropylene, and the intermediate barrier layer is preferably made of ethylene-vinyl alcohol copolymer. A first adhesive layer bonds the inner polyolefin layer to the intermediate barrier layer. A separate scrap layer may be disposed interiorly of the outer polyolefin layer and a second adhesive layer bonds this scrap layer to the intermediate barrier layer. Alternatively, the separate scrap layer may be interposed between the inner polyolefin layer and the second adhesive layer, or it may be interposed at both of said positions.

In order to make a container, the multi-layer structure is coextruded into a parison tube which is then placed in a blow mold and inflated by injection of air, under pressure, to form the container.

According to the invention, there is provided a process of making a multi-layer, preferably translucent plastics container, which comprises extruding in the molten state a coextrudate of a plurality of polymer layers to form therefrom a parison, and forming the parison into a container by blow moulding, wherein the parison and a container formed there from include at least one thermoplastic polyolefin surface layer, and further layers of adhesive, and barrier to prevent oxygen or product permeation and, said adhesive being located so as to adhere the barrier layer to at least one of the other layers, characterised in that the parison and container there from include at least one layer of scrap and the coextrudate is formed by providing an advancing tubular extrusion including the polyolefin layer, and while providing the said extrusion separately forming an advancing extruded laminate comprising barrier and adhesive layers and thereafter, but prior to the coextrudate finally being extruded as a whole via an orifice, bringing the laminate into confluence with the said tubular extrusion so as to surround the latter, the scrap layer being produced from a regrind of scrap of all layers of the coextrudates from the production of previous containers of the same constructions, which scrap is composed essentially of said polyolefin, barrier, adhesive and scrap.

Also disclosed herein is a method of forming a multi-layer parison of polymeric materials wherein at least two of said layers are relatively thin compared to at least one other layer comprising the steps of forming a thick layer of a first polymeric material within a tubular passageway and forming a laminate composed of thin layers of a second and third polymeric material and thereafter feeding said laminate completely around said thick layer. This method forms the subject of claims in our European divisional application No. 88 10 1331.2.

A multi-layer plastics container which can be made by the process according to the present invention comprises a container wall which is made of a multi-layer laminate structure comprising an outer thermoplastic polyolefin layer, an inner thermoplastic polyolefin layer and an intermediate barrier layer; a first adhesive layer for adhesively joining said inner thermoplastic polyolefin layer to said barrier layer, a scrap layer interiorly of said outer thermoplastic polyolefin layer and a second adhesive layer for adhesively joining said scrap layer to said barrier layer, wherein said scrap layer is composed essentially of a mixture of said thermoplastic layer, said adhesive and said barrier material.

Also disclosed herein is an apparatus for producing multi-layer parisons of polymeric materials wherein at least two of said layers are relatively thin compared to at least one other layer. The apparatus which is the subject of claims in our aforementioned European divisional application No. 88101331.2 comprises means including a tubular channel for forming a relatively thick layer of a first polymeric material and means for forming a laminate of at least two thin layers around the surface of the thick layer of polymeric material, said means including a segmented die block, each segment being formed with a polymeric accumulation reservoir, the die block being formed around said tubular channel having a first passageway of lesser diameter than said tubular channel leading from an accumulation reservoir in a first segment and adapted to be charged with a second polymeric material from said accumulation reservoir, and a second passageway leading from an accumulation reservoir in a second segment and adapted to be charged with a third polymeric material from said accumulation reservoir; said first and second passageways being defined between facing surfaces of adjacent segments; said first passageway leading to said tubular channel whereby a laminate can be formed in said die block composed of said second and third polymeric material and thereafter fed around said first polymeric material in said tubular channel.

The present invention will now be described in more detail, by way of example only, with reference to the accompanying drawings, in which:

Figure 1 is a sectional view of a preferred embodiment of the apparatus for forming multi-layered parisons;

Figure 2 is an enlarged sectional view of the apparatus shown in Figure 1;

Figure 3 is a schematic illustration of an apparatus which may be used in practising this invention which particularly illustrates its principal features; and

Figure 4 is a schematic sectional view illustrating the arrangements of the various layers of a six layer laminate structure, including a separate scrap layer, made in accordance with this invention.

According to the broad principles of this invention, the several layers are first coextruded to form a parison tube which is then molded and shaped into the desired container form. It must be mentioned, however, that formation of parison tubes and containers there from are well known techniques in the plastics industry. For example, one such method is described in US-A 4,079,850 wherein a multi-layer resin system in the molten state is formed into a parison by coextrusion. A pair of split molds are disposed around the parison, the split molds having such a configuration that when they are in registry with each other, they define a cavity which corresponds to the shape of the desired container. By injecting air, under pressure, the parison is blow molded to form the container.

The preferred apparatus for practising this invention comprises extrusion molding apparatus, as claimed in our aforementioned divisional application, in which two or more relatively thin layers of polymeric material are formed into a laminate within the apparatus before being joined to one or more relatively thick layers. The principle will be well understood by reference to Figure 3. For convenience, the various parts of the apparatus will be broadly defined with reference to Figure 3 and only the principal parts will be identified. They will be more specifically described with reference to the other Figures.

Figure 3 schematically represents an apparatus including a segmented die block with an extrusion die block segment 201; principal subextrusion die block segments 202, 203 and 204; and subextrusion die block segments 205, 206 and 207.

There is a hollow central flow tube 208 terminating in a core pin 209 the end portion of which terminates at an orifice 210 in the extrusion block 201. There is a principal tubular channel 211 around the flow tube communicating with a delivery channel 212 and with various passageways for polymer materials to be described hereinafter.

The schematic apparatus of Figure 3 is designed to produce a preferred laminated structure 100 of this invention illustrated in Figure 4. In Figure 4 there is an inner thermoplastic polyolefin layer 105 and progressing outwardly a first adhesive layer 109, an oxygen barrier layer 107, a second adhesive layer 113, a scrap layer 111, and an outer thermoplastic polyolefin layer 103. The inner and outer layers and the scrap layers may be regarded as structural layers and, as will be seen, they are relatively thick, of the order of 12 to 18 mils (0.30 to 0.46 mm). The adhesive and barrier layers are relatively thin, i.e. 0.5 to 2 mils (0.013 to 0.051mm). A particular advantage of the apparatus disclosed herein is that it makes it possible to form extremely thin layers completely around a facing surface of relatively thick layers in a uniform manner, while avoiding the problems noted above.

Reverting now to Figure 3, the inside structural layer is formed from a polymer in principal subextruder die block 204 which is formed with a polymer accumulation reservoir 213. There is a passageway 214 leading from the reservoir to the principal tubular channel 211. Adhesive layer 109 is extruded from auxiliary subextrusion die block 207 with accumulation reservoir 215 and second passageway 216. 214. Barrier layer 107 is extruded from subextrusion die block 206 with accumulation reservoir 217 and associated passageway 218 which leads into the passageway 216. The second adhesive layer 113 is extruded from auxiliary subextrusion die block 205 with accumulation reservoir 219 and third passageway 220 leading to passageway 216.

After the juncture of said passageway 216 with passageway 218 and 220, the said passageway joins the principal tubular channel. There is thus formed within the extrusion apparatus a laminate composed of the thin adhesive layers and the barrier layer. This laminate is brought into confluence with the thick inner layer within the extrusion apparatus.

The scrap layer 111 is extruded from principal subextruder 203 formed with accumulation reservoir 221 and passageway 222. It forms a junction with the principal tubular channel 211 at junction 223.

The outer layer 103 is extruded from principal subextrusion block 202 having an accumulation chamber 224 and an associated delivery passageway 225, the latter joining the principal tubular channel 211 at junction 226.

The principal tubular channel joins the delivery channel 212 and the six layered parison exits the apparatus around pin 209 through exit orifice 210.

As will be explained more fully hereinafter, in preferred embodiments of the invention the flow tube is programmable, that is it can move vertically within a fixed tube or mandrel. The size of the orifice 210 can also be adjusted.

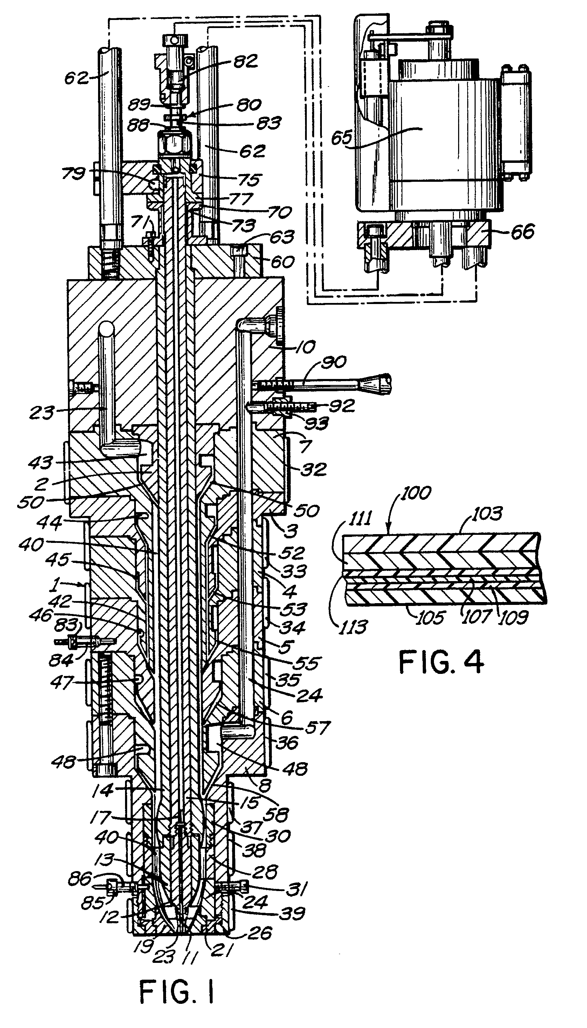

The apparatus will now be explained in more detail with reference to Figures 1 and 2. While the description will refer principally and for purposes of illustration to the preferred embodiments, those skilled in the art will recognize that many variations from the embodiments actually described are possible. For example, certain of the layers, such as the outside layer can be omitted. The apparatus can be arranged to form a three layered structure of thick structural layer and thin adhesive and barrier or other layer. The apparatus can be arranged so that the thick layer is the inner or the outer layer. More principal subextruders can be added to the vertically arranged subextruder column to form laminated structures with more than six layers.

The preferred apparatus 1 for forming a multi-layered parison tube according to this invention is shown in Figures 1 and 2. The apparatus comprises a segmented die block including a set of principal and auxiliary subextruders 7, 3, 4, 5, 6 and 8 arranged vertically and in this order from top to bottom as shown, to define a longitudinal direction. The die block is mounted on an adapter block 10. A substantially cylindrical mandrel 14 passes through coincident central holes in extruders 7, 3, 4, 5, 6, and 8 and adapter block 10. The annular space between mandrel 14 and the extruders 7, 3, 4, 5, 6 and 8 defines a principal annular discharge channel 40 through which the multi-layered laminate flows. The mandrel 14 has a concentric central cylindrical cavity through which a programming flow tube 15 passes. The flow tube is vertically moveable within the mandrel. A blow pin 11 is mounted at the downstream end portion of mandrel 14 on a cylindrical pin holder 12 which is attached directly to programming flow tube 15. The pin holder 12 is held in position by a pin holder sleeve 13 attached to the downstream end of mandrel 14. There is thus defined a hollow unit through which air or other gas may be forced to blow mold the parison.

A principal subextruder 8 comprises the downstream end of the segmented die block and, as shown, has an upstream cylindrical portion of substantially greater radius than its downstream portion. The exterior surface of the tip end portion of subextruder 8 is threaded to engage and hold an end cap 26 which consists of a cylindrical pipe portion whose interior surface is threaded and which has an interiorly directed lip. A bushing ring 21, which forms a seat for bushing 19, is shaped to be held in place by end cap 26. Bushing 19 has a central interior nozzle cavity which forms a central annular orifice 23 surrounding but spaced from the blow pin 11 to form an exit orifice through which the multi-layered laminate can be extruded.

The cylindrical, central cavity of subextruder 8 has additionally three pipe-shaped pieces, to wit a bushing adapter 24, a lower adapter sleeve 28, and an upper adapter sleeve 30 mounted therein in tandem from bottom to top whose interior surfaces together with the exterior surface of the mandrel 14 define the downstream portion or delivery channel of the principal tubular discharge channel 40.

The downstream end of bushing adapter 24 abuts against bushing 19 and bushing ring 21. The concentricity of the extrudate may be partially controlled by an axially disposed adapter set screws 31 passing through top block 8 to press against bushing adapter 24.

In the preferred embodiment shown, a central longitudinal air shaft 17 passes through programming flow tube 15, pin holder 12, and blow pin 11 and provides a means by which air or other vapor is introduced to prevent the parison walls from collapsing during extrusion and to blow mold the parison.

Each of the subextruder die blocks 6, 5, 4, 3, and 7 comprises a cylindrical top portion with a central hole therein and a downstream sleeve portion so conformed to fit into the cylindrical top portion of the adjacent extruder or subextruder so as to form annular accumulation reservoirs 48, 47, 46, 45, 44 and 43 in the segmented die block to hold the melted thermoplastic resin material used for each individual layer of the six-layered laminate. Resin material is fed to each of the reservoirs 48, 47, 46, 45, 44 and 43 from an external source which is not shown. The resin is distributed circumferentially by feed passageways, die blocks 6, 5, 4, 3 and 7 and adapter block 10. The annular accumulation reservoir 48 between principal subextruder die blocks 6 and 8 is fed by feed passageway 24 having an axially disposed inlet in adapter block 10. Annular accumulation reservoir 43 in die block 7 is formed between flow sleeve 2 and principal subextruder die block 6, and is fed by feed passageway 23.

The feed passageways can be equipped with a regulating system such as pressure transducer 90 and a choke pin 92 mounted in choke pin adapter 93 for regulating the flow rate of polymeric material. The accumulation reservoirs 43, 47 and 48 in die blocks 7, 6 and 8 are connected directly to the principal tubular discharge flow channel 40 by annular connecting passageways 50, 57 and 58. However, the annular accumulation reservoirs 44, 45 and 46 are connected to an auxiliary discharge flow channel 42 instead, by way of annular connecting passageways 52, 53 and 55. At its downstream end, the auxiliary discharge channel 42 connects with the principal flow channel 40.

Auxiliary discharge flow channel 42 is substantially smaller in diameter than principal tubular flow channel 40 to which it is connected. The use of an auxiliary discharge flow channel 42 allows preforming of a three-layered laminate consisting of two adhesive layers and a barrier layer which may be formed completely around the inner layer without causing imperfections in the final products.

It will be understood from the description and from the figures that the accumulation reservoirs and the polymer passageways leading from the accumulation reservoirs to the first or auxiliary passageway and to the principal tubular channel 40 may be defined by facing surfaces of adjacent extruders. They may be, however, conveniently formed in the individual extruder blocks themselves. This is especially true of the accumulation reservoirs.

The passageways are tapered, i.e. each has a diameter at the downstream end less than the diameter at the end closer to the accumulation reservoirs. Therefore, the pressure of the molten polymer at the downstream end is greater than at the upstream end. As a result, the stream of molten resin becomes laminar flow so that there is reduced turbulence as each polymer stream joins another polymer stream flowing in one or other passageway 40, 42.

Heat may be supplied to the die block by any convenient means. The extruders and subextruders may be insulated by ceramic bands 39, 38, 37, 36, 35, 34, 33 and 32 as shown. Thermocouples may be mounted in the extruders and subextruders 8, 6, 5, 4, 3 and 7. As shown, for example, thermocouple 85 is mounted in adapter 86 and senses the temperature in principal subextruder 8 and thermocouple 83 in adapter 84 senses the temperature in auxiliary subextruder 5.

The blow pin 11 is positioned by a pin orientation bar 75 axially attached to and holding the programming flow tube 15 by bar adapter 77. Orientation bar 75 is held in position by a clamp pin 79, and a bar adapter 77 is supported atop adapter block 10 by a cylindrical flanged bushing 70 attached to a mounting plate 60 which is fixed to adapter block 10 by mounting bolt 63. Air is admitted to air shaft 17 by means of a couplet 80 which passes air to the end of programming flow tube 15 through bar adapter 77 from air inlet 82.

Movement of programming flow tube 15 within mandrel 14 may be controlled by an electronic parison programmer 65, for example, a Hunker Programmer available from Hunker Acroboratories, Inc. The programmer 65 is attached to programmer base plate 66 which is connected to mounting plate 60 by tie rods 62.

In the preferred practice of this invention as illustrated in Figure 4, the laminate structure has an intermediate gas and oxygen barrier layer of ethylene-vinyl alcohol copolymer, outer and inner structural layers of a thermoplastic polyolefin, a separate scrap layer adjacent to the outer polyolefin layer and two adhesive layers, one interposed between the intermediate barrier layer and the scrap layer, and the other interposed between the intermediate barrier layer and the inner polyolefin layer.

The polyolefins which are suitable in forming the outer and inner layers of the laminate structure are thermoplastic olefinic polymers such as e.g., high and low density polyethylene, polypropylene and blends of these.

Both adhesive layers are preferably made of maleic anhydride modified polypropylene wherein the polypropylene backbone is modified with maleic anhydride moieties. One such adhesive is available from Mitsui, Japan, under the Trademark AD-MER QB 530. In general, however, polypropylene modified with ethylenically unsaturated carboxylic anhydrides may be used as the adhesive layers for the present laminate structure.

It must be stated that the aforementioned adhesives are particularly well suited when polypropylene or propylene - ethylene random copolymers constitute the outer and inner structural layers. However, when either or each of these layers is made of polyethylene, it is preferable to use a different adhesive in contact therewith such as, for example, the Plexar adhesives manufactured by Chemplex Company, Rolling Meadows, Illinois. These adhesives are a blend of ethylenevinyl acetate copolymer and a graft copolymer of polyethylene and a dicarboxylic acid anhydride.

The scrap layer is made of regrind of the coextrudates of the different thermoplastic layers used to form the parison tube. The nature of the scrap and its incorporation into the laminate structure will hereinafter be described in detail in connection with the description of the process of this invention.

As mentioned above, the multi-layer laminate structure generally designated as 100 has an outer polyolefin structural layer 103, an inner polyolefin structural layer 105 and an intermediate oxygen barrier layer 107. The inner polyolefin layer 105 is adhesively bonded to the intermediate barrier layer 107 by the adhesive layer 113.

All the layers are coextensively bonded along their respective junctions with no interlaminar separation between the respective layers of the laminate structure.

In order to form the laminate structure, the thermoplastic resins used to make the different layers are coextruded in the molten state through an extrusion apparatus, preferably an embodiment of the apparatus described herein, to form the parison tube. The parison tube is then blow molded by injection of air or other vapor, under pressure, and is shaped into a container in a separate container mold, not shown. The excess materials from this blow molding operation are ground up and mixed as a homogeneous scrap to be introduced into the laminate structure.

As a practical matter, therefore, the process and apparatus of this invention permits utilization of all the scrap produced during the container forming operations. Accordingly, the economy of the operation is considerably improved and waste disposal is virtually eliminated.

In addition to improving the economy of operation and reduction of waste disposal, it has been found that inclusion of a separate scrap layer in the multi-layer laminate structure does not detract from the transparency of unoriented containers made of such laminate structures. The ability to make transparent containers by nonoriented blow molding of a multi-layer laminate structure having a completely separate layer of scrap constitutes a novel and surprising feature of the present invention.

While the invention has heretofore been described with particularity and illustrated by reference to a 6-layer laminate structure, several changes and modifications are suggested from the foregoing disclosure which are nevertheless within the scope of this inventions as defined in the claims. For example, additional layers may be used for decorative purposes, or otherwise, and more than one scrap layer can be introduced into the laminate structure if desired.

The invention comprehends the making of a 5-layer laminate structure, and the production of containers therefrom. In this construction, the scrap layer may constitute the outer layer and the outer polyolefin layer may be eliminated.

Additionally, if desired, the scrap layer may be interposed between the inner polyolefin layer and the second adhesive layer or two scrap layers may be incorporated in the laminate structure; one interposed between the outer polyolefin layer and the first adhesive layer, and the other is interposed between the inner polyolefin layer and the second adhesive layer.

Containers having excellent oxygen barrier properties and good transparency can be made by varying the relative thicknesses of the different layers. For example, excellent barrier properties and good transparency can be obtained from the multi-layer structure of this invention when the thickness of the ethylenevinyl alcohol layer is about 0.5 to 2 mils (0.013 to 0.051 mm) and the scrap layer constitutes up to about 40 weight percent of the total extrudate.

**Claims**

1. A process of making a multi-layer, preferably translucent plastics container, which comprises extruding in the molten state a coextrudate of a plurality of polymer layers to form therefrom a parison, and forming the parison into a container by blow moulding, wherein the parison and a container formed therefrom include at least one thermoplastic polyolefin surface layer (105), and further layers of adhesive (e.g. 109), and barrier (107) to prevent oxygen or product permeation and, said adhesive being located so as to adhere the barrier layer to at least one of the other layers, characterised in that the parison and container therefrom include at least one layer of scrap (111) and the coextrudate is formed by providing an advancing tubular extrusion including the polyolefin layer, and while providing the said extrusion separately forming an advancing extruded laminate comprising barrier and adhesive layers and thereafter, but prior to the coextrudate finally being extruded as a whole via an orifice (e.g. 210), bringing the laminate into confluence with the said tubular extrusion so as to surround the latter, the scrap layer being produced from a regrind of scrap of all layers of the coextrudates from the production of previous containers of the same constructions, which scrap is composed essentially of said polyolefin, barrier, adhesive and scrap.

2. A process according to claim 1, wherein an adhesive layer (113) is co-extruded with the other layers to adhere said barrier layer (107) to the scrap layer (111).

3. A process according to claim 1 or claim 2, wherein the polymer layers are coextruded to provide the parison and container with an inner surface layer (105), or both an inner surface layer (105) and an outer surface layer (103), of the thermoplastic polyolefin.

4. A process according to any of claims 1 to 3, wherein the or each thermoplastic polyolefin layer (105, 103) is made of high or low density polyethylene, polypropylene or a random copolymer of propylene and ethylene, e.g. containing up to about 2 mol percent ethylene.

5. A process according to claim 1, comprising forming the parison by extruding through a die orifice (23, 210) a tubular coextrudate composed of layers which comprise inner and outer polyolefin layers (105, 103), the barrier layer (107) which for example is an ethylenevinyl alcohol copolymer, an adhesive layer (e.g. 109) contiguous with the barrier layer, and the said scrap layer (111), the latter being contiguous, for example, with the outer polyolefin layer (103).

6. A process according to claim 5, wherein the constituent layers of the coextrudate are extruded in the following manner:
   (i) polyolefin to form the inner layer (105) is caused to advance towards the die orifice as a tubular extrusion;
   (ii) separately, a tubular laminate is formed comprising layers of adhesive (109), barrier (107) and adhesive (113);
   (iii) the tubular laminate is brought into confluence with the advancing tubular polyolefin extrusion, thereby surrounding same;
   (iv) a tubular extrusion of said scrap (111) is formed and brought into confluence with the advancing combination of said laminate and polyolefin extrusion, whereby the scrap extrusion surrounds the said advancing combination; and
   (v) a tubular extrusion of polyolefin to form the outer layer (103) is formed and brought into confluence with the advancing tubular combination of scrap, laminate and inner polyolefin extrusion to surround the said combination and complete the multi-layer coextrudate, which then advances toward the die orifice (23, 210).

7. A process according to claim 5, wherein the constituent layers of the coextrudate are extruded in the following manner:
   (i) polyolefin to form the inner layer (105) is caused to advance towards the die orifice (23, 210) as a tubular extrusion;
   (ii) a tubular extrusion of said scrap (111) is formed and brought into confluence with the advancing tubular extrusion, thereby to surround same;
   (iii) separately, a tubular laminate is formed comprising layers of adhesive (109), barrier (107) and adhesive (113);
   (iv) the tubular laminate is brought into confluence with the advancing tubular combination of scrap (111) and polyolefin (105), whereby the laminate surrounds the said tubular combination; and
   (v) a tubular extrusion of polyolefin to form the outer layer (103) is formed and brought into confluence with the advancing tubular combination of laminate, scrap (111) and polyolefin (105) to surround this tubular combination and complete the multi-layer coextrudate, which then advances toward the die orifice (23, 210).

8. A process according to any of claims 5 to 7, wherein the inner and outer layers (105, 103) are composed of polyolefins selected from high or low density polyethylene, polypropylene, and random copolymers of propylene and ethylene containing up to e.g. about 2 mol percent ethylene.

9. A process according to any of claims 1 to 8, wherein said adhesive is selected from (a) maleic anhydride-modified polypropylene and (b) a blend of ethylene-vinyl acetate copolymer and a graft copolymer of polyethylene and a dicarboxylic acid anhydride.

10. A process according to any of claims 1 to 9, wherein the scrap layer (107) is provided so as to constitute up to 40 percent by weight of the extrudate.

11. A process according to any of claims 5 to 10, wherein the adhesive and barrier layers (109, 113, 107 etc.) are formed as relatively thin layers of the coextrudate, compared with the inner, outer and scrap layers (105, 103, 107) of the coextrudate, the adhesive and barrier layers for example being 0.5 to 2 mils (0.013 to 0.051 mm) thick, and the inner, outer and scrap layers for example being 12 to 18 mils (0.30 to 0.46 mm) thick.

## Revendications

1. Procédé de fabrication d'un conteneur en matière plastique à plusieurs couches, de préférence translucide, dans lequel on extrude, à l'état fondu, un produit co-extrudé d'une pluralité de couches de polymères, afin de former une paraison à partir de celui-ci, et on conforme la paraison en un conteneur par moulage par soufflage, la paraison et un conteneur formé à partir de celle-ci comportant au moins une couche superficielle thermoplastique en polyoléfine (105) et d'autres couches adhésive (par exemple 109) et formant barrière (107), afin d'empêcher la perméation de l'oxygène ou d'un produit, la couche adhésive étant disposée de manière à faire adhérer la couche formant barrière à l'une au moins des autres couches, caractérisée en ce que la paraison et le conteneur en résultant comportent au moins une couche de déchet (111) et le produit co-extrudé est formé en créant une extrusion tubulaire avançant comportant la couche de polyoléfine, et, tout en créant cette extrusion, en formant séparément un stratifié extrudé avançant comprenant les couches adhésive et formant barrière, et après cela mais avant que le produit co-extrudé ne soit finalement extrudé dans son ensemble à travers un orifice (par exemple 210), en amenant le stratifié à confluer avec l'extrusion tubulaire de manière à entourer cette dernière, la couche de déchet étant produite à partie d'une récupération de déchets de toutes les couches des produits co-extrudés provenant de la production de conteneurs précédents ayant les mêmes constructions, ce déchet étant composé essentiellement de ladite polyoléfine, de la matière formant barrière, de la matière adhésive et du déchet.

2. Procédé suivant la revendication 1 caractérisé en ce qu'une couche adhésive (113) est co-extrudée avec les autres couches de manière à faire adhérer la couche formant barrière (107) à la couche de déchet (111).

3. Procédé suivant la revendication 1 ou la revendication 2 caractérisé en ce que les couches de polymères sont co-extrudées de manière à produire la paraison et le conteneur avec une couche superficielle interne (105) ou bien à la fois avec une couche superficielle interne (105) et une couche superficielle externe (103) en polyoléfine thermoplastique.

4. Procédé suivant l'une quelconque des revendications 1 à 3 caractérisé en ce que la ou chaque couche de polyoléfine thermoplastique (105, 103) est formée de polyéthylène à haute densité ou à basse densité, de polypropylène ou d'un copolymère aléatoire de propylène et d'éthylène, contenant par exemple jusqu'à environ 2 % molaire d'éthylène.

5. Procédé suivant la revendication 1 caractérisé en ce qu'on forme la paraison en extrudant, à travers un orifice de filière (23, 210), un produit co-extrudé tubulaire composé de couches qui comprennent des couches de polyoléfine interne et externe (105, 103), la couche formant barrière (107) qui est par exemple un co-polymère éthylène-alcool vinylique, une couche adhésive (par exemple 109) contiguë à la couche formant barrière, et la couche de déchet (111), cette dernière couche étant contiguë, par exemple à la couche de polyoléfine externe (103).

6. Procédé suivant la revendication 5 caractérisé en ce que les couches constitutives du produit co-extrudé sont extrudées de la manière suivante :

   (i) on fait avancer, en direction de l'orifice de la filière, la polyoléfine destinée à former la couche interne (105), sous la forme d'une extrusion tubulaire;

   (ii) on forme séparément un stratifié tubulaire comprenant des couches adhésive (109), formant barrière (107) et adhésive (113);

   (iii) on amène le stratifié tubulaire à confluer avec l'extrusion de polyoléfine tubulaire avançant, de manière qu'il entoure cette dernière;

   (iv) on forme une extrusion tubulaire du déchet (111) et on la fait confluer avec la combinaison, en train d'avancer, du stratifié et de l'extrusion de polyoléfine, de telle façon que l'extrusion du déchet entoure la combinaison en train d'avancer; et

   (v) on forme une extrusion tubulaire de polyoléfine destinée à constituer la couche externe (103) et on l'amène à confluer avec la combinaison tubulaire, en train d'avancer, formée de l'extrusion du déchet, du stratifié et de l'extrusion de polyoléfine interne, afin d'entourer cette combinaison et de compléter le produit co-extrudé à plusieurs couches, qui avance ensuite en direction de l'orifice de la filière (23, 210).

7. Procédé suivant la revendication 5 caractérisé en ce que les couches constitutives du produit co-extrudé sont extrudées de la manière suivante :

(i) on fait avancer la polyoléfine, qui est destinée à constituer la couche interne (105), en direction de l'orifice de la filière (23, 210), sous la forme d'une extrusion tubulaire;

(ii) on forme une extrusion tubulaire du déchet (111) et on l'amène à confluer avec l'extrusion tubulaire en train d'avancer, de manière qu'elle entoure cette dernière;

(iii) on forme séparément un stratifié tubulaire constitué de couches adhésive (109), formant barrière (107) et adhésive (113);

(iv) on amène le stratifié tubulaire à confluer avec la combinaison tubulaire avançant du déchet (111) et de la polyoléfine (105), de telle façon que le stratifié entoure cette combinaison tubulaire; et

(v) on forme une extrusion tubulaire de polyoléfine destinée à constituer la couche externe (103) et on l'a fait confluer avec la combinaison tubulaire avançant du stratifié, du déchet (111) et de la polyoléfine (105), afin d'entourer cette combinaison tubulaire et de compléter le produit co-extrudé à plusieurs couches, qui avance ensuite vers l'orifice de la filière (23, 210).

8. Procédé suivant l'une quelconque des revendications 5 à 7 caractérisé en ce que les couches interne et externe (105, 103) sont constituées de polyoléfines choisies parmi le polyéthylène à haute densité ou à basse densité, le polypropylène ou un copolymère aléatoire de propylène et d'éthylène, contenant par exemple jusqu'à environ 2 % molaire d'éthylène.

9. Procédé suivant l'une quelconque des revendications 1 à 8 caractérisé en ce que l'adhésif est choisi parmi (a) un polypropylène modifié par l'anhydride maléique et (b) un mélange d'un copolymère éthylène-acétate vinylique et d'un copolymère greffé de polyéthylène et d'anhydride d'acide dicarboxylique.

10. Procédé suivant l'une quelconque des revendications 1 à 9 caractérisé en ce que la couche de déchets (107) est prévue de manière à constituer jusqu'à 40% en poids du produit extrudé.

11. Procédé suivant l'une quelconque des revendications 5 à 10 caractérisé en ce que les couches adhésives et formant barrière (109, 113, 107...etc) sont formées en tant que couches relativement minces du produit co-extrudé, comparativement aux couches interne, externe et de déchet (105, 103, 107) du produit co-extrudé, les couches adhésives et formant barrière ayant, par exemple, une épaisseur allant de 0,5 à 2 mils (0,013 à 0,051 millimètre) et les couches interne, externe et de déchet ayant une épaisseur allant, par exemple, de 12 à 18 mils (0,30 à 0,46 millimètre).

**Patentansprüche**

1. Verfahren zur Herstellung eines mehrschichtigen, vorzugsweise durchsichtigen Kunststoffbehälters, das das Extrudieren im geschmolzenen Zustand eines Coextrudats aus einer Mehrzahl von Polymerschichten, um daraus einen Blasvorformling zu bilden, und das Ausformen des Blasvorformlings zu einem Behälter durch Blasformen umfaßt, bei dem der Blasvorformling und ein daraus gebildeter Behälter wenigstens eine thermoplastische Polyolefin-Oberflächenschicht (105) und weitere Schichten aus Klebstoff (z.B.109) und Sperrschicht (107) zur Verhinderung von Sauerstoff- oder Produktdurchlässigkeit enthalten und der Klebstoff so gelegen ist, daß die Sperrschicht an wenigstens einer der anderen Schichten anhaftet, dadurch gekennzeichnet, das der Blasvorformling und der daraus gebildete Behälter wenigstens eine Schicht aus Abfall (111) enthalten und das Coextrudat gebildet wird, indem eine vorwärtsbewegte schlauchförmige Extrusion, die die Polyolefinschicht einschließt, eingerichtet wird und während dafür gesorgt wird, daß diese Extrusion getrennt ein vorwärtsbewegtes extrudiertes Laminat bildet, das die Sperr- und Klebschichten umfaßt,und danach, aber bevor das Coextrudat endgültig als ein Ganzes durch eine Öffnung (z.B.210) extrudiert wird, das Laminat so in Zusammenfluß mit der besagten schlauchförmigen Extrusion gebracht wird, daß es die letztere umgibt, und die Abfallschicht aus wiedervermahlenen Abfällen von allen Schichten der Coextrudate von der Herstellung früherer Behälter mit den gleichen Aufbauten hergestellt wird, wobei der Abfall im wesentlichen aus dem besagten Polyolefin, der Sperrschicht, der Klebschicht und Abfall besteht.

2. Verfahren nach Anspruch 1, bei dem eine Klebstoffschicht (113) mit den anderen Schichten coextrudiert wird, um die Sperrschicht (107) an die Abfallschicht (111) anzukleben.

3. Verfahren nach Anspruch 1 oder Anspruch 2, bei dem die Polymerschichten coextrudiert werden, um den Blasvorformling und den Behälter mit einer inneren Oberflächenschicht (105) oder sowohl einer inneren Oberflächenschicht (105) und einer äußeren Oberflächenschicht (103) aus dem thermoplastischen Polyolefin zu liefern.

4. Verfahren nach einem der Ansprüche 1 bis 3, bei dem die oder jede thermoplastische Polyolefinschicht (105, 103) aus hoch- oder niedrigdichtem Polyäthylen, Polypropylen oder statistischem Copolymer von Propylen und Äthylen, das z.B. bis zu etwa 2 Mol.-% Äthylen enthält, hergestellt ist.

5. Verfahren nach Anspruch 1, das das Bilden des Blasvorformlings durch Extrudieren durch eine Düsenöffnung (23,210) eines schlauchförmigen Coextrudats umfaßt, das aus Schichten zusammengesetzt ist, die eine innere und eine äußere Polyolefinschicht (105, 103), die Sperrschicht (107), die z.B. ein ÄthylenVinylalkohol-Copolymer ist, eine Klebstoffschicht (z.B.109), die der Sperrschicht benachbart ist, und die besagte Abfallschicht (111) umfassen, wobei die letztere z.B. mit der äußeren Polyolefinschicht (103) benachbart ist.

6. Verfahren nach Anspruch 5, bei dem die Bestandteilschichten des Coextrudats auf die folgende Weise extrudiert werden:
(i) Polyolefin zum Bilden der inneren Schicht (105) wird gezwungen, sich nach vorn zu der Düsenöffnung als eine schlauchförmige Extrusion vorzubewegen;
(ii) getrennt wird ein schlauchförmiges Laminat gebildet, das Schichten aus Klebstoff (109), Sperrschicht (107) und Klebstoffschicht (113) umfaßt;
(iii)das schlauchförmige Laminat wird mit der sich vorwärts bewegenden schlauchförmigen Polyolefin-Extrusion zum Zusammenfluß gebracht, wobei es dieselbe umgibt;
(iv) es wird eine schlauchförmige Extrusion aus dem Abfall (111) gebildet und in Zusammenfließen mit der sich vorwärts bewegenden Kombination aus dem besagten Laminat und der Polyolefin-Extrusion gebracht, wobei die Abfall-Extrusion die besagte sich vorwärtsbewegende Kombination umgibt; und
(v) eine schlauchförmige Extrusion aus Polyolefin zum Bilden der äußeren Schicht (103) wird gebildet und mit der sich vorwärtsbewegenden schlauchförmigen Kombination aus Abfall, Laminat und innerer Polyolefin-Extrusion zum Zusammenfließen gebracht, um die besagte Kombination zu umgeben und das mehrschichtige Coextrudat zu vervollständigen, welches dann in Richtung auf die Düsenöffnung (23, 210) vorbewegt wird.

7. Verfahren nach Anspruch 5, bei dem die Bestandteilschichten des Coextrudats auf die folgende Weise extrudiert werden:
(i) Polyolefin zum Bilden der inneren Schicht (105) wird gezwungen, sich nach vorn in Richtung auf die Düsenöffnung (23, 210) als eine schlauchförmige Extrusion zu bewegen;
(ii) eine schlauchförmige Extrusion aus dem Abfall (111) wird gebildet und mit der sich vorwärtsschiebenden schlauchförmigen Extrusion zum Zusammenfließen gebracht, wobei es dieselbe umgibt;
(iii)getrennt wird ein schlauchförmiges Laminat gebildet, das die Schichten aus Klebstoff (109), Sperrschicht (107) und Klebstoff (113) umfaßt;
(iv) das schlauchförmige Laminat wird mit der sich vorwärtsbewegenden schlauchförmigen Kombination aus Abfall (111) und Polyolefin (105) zum Zusammenfließen gebracht, wobei das Laminat die besagte schlauchförmige Kombination umgibt; und
(v) eine schlauchförmige Extrusion aus Polyolefin zum Bilden der äußeren Schicht (103) wird gebildet und mit der sich vorwärtsbewegenden schlauchförmigen Kombination aus Laminat, Abfall (111) und Polyolefin (105) zum Zusammenfließen gebracht, um diese schlauchförmige Kombination zu umgeben und das mehrschichtige Coextrudat zu vervollständigen, welches dann in Richtung auf die Düsenöffnung (23, 210) vor geschoben wird.

8. Verfahren nach einem der Ansprüche 5 bis 7, bei dem die inneren und äußeren Schichten (105, 103) aus Polyolefinen zusammengesetzt sind, die aus hoch- oder niedrig-dichtem Polyäthylen, Polypropylen und statistischen Copolymeren von Propylen und Äthylen, die wenigstens bis zu z.B. etwa 2 Mol-% Äthylen enthalten, ausgewählt sind.

9. Verfahren nach einem der Ansprüche 1 bis 8, bei dem der Klebstoff aus (a) Maleinsäureanhydrid-modifiziertem Polypropylen und (b) einer Mischung von Äthylen-Vinylacetat-Copolymer und einem Pfropf-Copolymer von Polyäthylen und einem Dicarbonsäureanhydrid ausgewählt ist.

10. Verfahren nach einem der Ansprüche 1 bis 9, bei dem die Abfallschicht (107) so vorgesehen ist, daß sie bis zu 40 Gew.-% des Extrudats bildet.

11. Verfahren nach einem der Ansprüche 5 bis 10, bei dem die Klebmittel- und Sperrschichten (109, 113, 107 usw.) als relativ dünne Schichten des Coextrudats im Vergleich zu den inneren, äußeren und Abfallschichten (105, 103, 107) des Coextrudats ausgebildet sind, wobei die Klebmittel- und Sperrschichten z.B. 0,5 bis $2 \cdot 10^{-3}$ Zoll (0,013 bis 0,051 mm) dick sind und die inneren, äußeren und Abfallschichten z.B, 12 bis 18 $\cdot 10^{-3}$ Zoll (0,30 bis 0,46 mm) dick sind.

FIG. I

FIG. 4

EP 0 110 493 B1

FIG. 2

14

FIG.3